# EUROPÄISCHE PATENTSCHRIFT

(11) **EP 1 307 654 B1**
(45) Veröffentlichungstag und Bekanntmachung des Hinweises auf die Patenterteilung: **13.09.2006**
(21) Anmeldenummer: 01933617.1
(22) Anmeldetag: 21.04.2001
(51) Int. Cl.: F02P 5/152, F02D 35/02, F02D 41/22, F02D 41/40

(54) **VERFAHREN UND VORRICHTUNGEN ZUM VERMEIDEN VON KLOPFEN BEI AUSFALL EINER KLOPFREGELUNG**
METHOD AND DEVICE FOR AVOIDING KNOCKING ON FAILURE OF AN ANTI- KNOCK REGULATOR
PROCEDE ET DISPOSITIF PERMETTANT D'EVITER LE CLIQUETIS EN CAS DE DEFAILLANCE D'UN APPAREIL DE REGULATION DU CLIQUETIS

(30) Priorität: 29.07.2000 DE 10037024
(43) Veröffentlichungstag der Anmeldung: 07.05.2003
(73) Patentinhaber: ROBERT BOSCH GMBH, 70442 Stuttgart (DE)
(72) Erfinder: SAULER, Jürgen, 70192 Stuttgart (DE); TORNO, Oskar, 71701 Schwieberdingen (DE); HEINSTEIN, Axel, 71299 Wimsheim (DE); KLUTH, Carsten, 70469 Stuttgart (DE); HAEMING, Werner, 74861 Neudenau (DE)
(86) Internationale Anmeldenummer: PCT/DE2001/001528
(87) Internationale Veröffentlichungsnummer: WO 2002/010586

(56) Entgegenhaltungen:
- JP-A- 56 066 426
- US-A- 4 521 769
- US-A- 4 700 677
- US-A- 5 215 059
- US-A- 5 713 328
- PATENT ABSTRACTS OF JAPAN vol. 012, no. 315 (M-735), 26. August 1988 (1988-08-26) & JP 63 085238 A (MAZDA MOTOR CORP), 15. April 1988 (1988-04-15)

## Beschreibung

### STAND DER TECHNIK

Die Erfindung betrifft ein Verfahren, bei dem ein Zündwinkel bzw. Zündzeitpunkt eines Benzin- oder Dieselmotors mit Direkteinspritzung mit Hilfe einer Klopfregelung zur Vermeidung des Klopfens während des Motorbetriebs geregelt wird. Im fehlerfreien Betrieb der Klopfregelung wird in den Verbrennungsraum eines Zylinders des Motors einmal je Arbeitszyklus Kraftstoff eingespritzt. Außerdem wird die Verbrennung durch die Klopfregelung überwacht.

Eine bekannte Maßnahme beim Ausfall der Klopfregelung von Benzinmotoren besteht darin, dass eine sogenannte Sicherheitsspätverstellung des auf die Kurbelwellenstellung bezogenen Zündwinkels durchgeführt wird, wobei der Zylinder bei 0° KW (Kurbelwelle) im oberen Todpunkt steht. Der Zündwinkel wird typischerweise um 12° KW (Kurbelwelle) bis 15° KW nach spät verstellt. Bei einem solchen Zündwinkel tritt im Motor kein Klopfen auf. Nachteilig ist jedoch, dass der Wirkungsgrad des Motors aufgrund der Sicherheitsspätverstellung kleiner wird.

Die der Erfindung zugrunde liegende Problematik besteht darin, zum Vermeiden von Klopfen bei Ausfall einer Klopfregelung ein einfaches Verfahren anzugeben, das auch bei Ausfall der Klopfregelung einen Betrieb des Motors mit hohem Wirkungsgrad ermöglicht. Außerdem soll eine zugehörige Vorrichtung angegeben werden.

Aus der JP56066426 A ist bereits bekannt beim Ausfall eines Klopfsensors die Einspritzmenge als klopfverringernde Maßnahme zu erhöhen.

### VORTEILE DER ERFINDUNG

Die vorliegende Erfindung schafft ein Verfahren mit den im Patentanspruch 1 angegebenen Verfahrensschritten. Weiterbildungen sind in den Unteransprüchen angegeben.

Für die Erfindung werden die Zusammenhänge bei der Direkteinspritzung von Kraftstoff genutzt. Durch die Konstruktion des Einspritzsystems wird erreicht, dass der Kraftstoff besonders fein zerstäubt wird. Durch den beim Ansaug- und Verdichtungstakt erzeugten Luftstrom werden unterschiedliche Drehbewegungen von Luftschichten erreicht. Durch Einspritzung des Kraftstoffs sowohl im Ansaug- als auch im Verdichtungstakt kommt es zu unterschiedlichen Mischungsverhältnissen im Verbrennungsraum. Um die Zündkerze herum befindet sich ein fettes Kraftstoff-Luftgemisch, das von mageren Schichten am Rand des Verbrennungsraums umgeben ist. Magere Schichten, d.h. Schichten, bei denen das Mischungsverhältnis von Kraftstoff zu Luft in kg kleiner als 1:14,8 ist, sind weniger gut entflammbar als Schichten mit fettem Kraftstoffgemisch. Eine wesentliche Ursache für das Klopfen sind Selbstzündungen in Randbereichen, die zusätzlich zur Hauptzündung auftreten.

Die Erfindung beruht auf der Erkenntnis, dass sich die ohnehin schon verringerte Klopfneigung von Direkteinspritzmotoren durch mehrmaliges Einspritzen während eines Arbeitszyklus des Motors weiter herabsetzen lässt. Beispielsweise wird bei einem Benzinmotor während des Ansaugtakts und des Verdichtungstaktes je einmal eingespritzt, oder die Einspritzmenge wird erhöht. Durch diese Maßnahme wird ein sehr großes Gefälle des Mischungsverhältnisses vom Zündkerzenbereich bis zum Rand des Verbrennungsraumes hin erreicht. Das Gefälle wirkt einem Klopfen des Motors entgegen. Weil das Klopfen auf diese Art bereits eingeschränkt ist, muss keine Sicherheitsspätverstellung mehr oder jedenfalls nur eine Sicherheitsspätverstellung um kleinere Winkel durchgeführt werden. Eine beträchtliche Herabsetzung des Wirkungsgrades des Motors lässt sich durch das erfindungsgemäße Verfahren vermeiden,' weil der Zündwinkel nicht um die üblichen großen Werte von 12° KW bis 15°KW nach spät verstellt werden muss.

Bei einer Weiterbildung des erfindungsgemäßen Verfahrens wird der Zündwinkel nach Änderung der Einspritzmenge abhängig von der Motordrehzahl und/oder von der Motorlast gesteuert. Die Motordrehzahl und die Motorlast sind die wesentlichen Kenngrößen, die den Zündwinkel beeinflussen. Es lassen sich jedoch auch weitere Kenngrößen berücksichtigen, um die Steuerung zu verbessern.

Die Erfindung betrifft außerdem eine Vorrichtung zum Vermeiden von Klopfen bei Ausfall einer Klopfregelung. Die Vorrichtung ermöglicht die Durchführung der Verfahrensschritte des erfindungsgemäßen Verfahrens und enthält eine Überwachungsschaltung für eine Klopfregelung und eine Steuereinheit, die abhängig vom Ausgangssignal der Überwachungsschaltung bei einem Fehler in der Klopfregelung Ersatzmaßnahmen zur Vermeidung von Klopfen einleitet. Die Steuereinheit ist so aufgebaut, dass die Ersatzmaßnahme bei einem Benzinmotor z.B. in einem Übergang von einem einmaligen Einspritzen des Kraftstoffs je Arbeitszyklus eines Zylinders des Motors zum zweimaligen Einspritzen von Kraftstoff je Arbeitszyklus besteht. Die oben für das erfindungsgemäße Verfahren genannten technischen Wirkungen und Überlegungen gelten auch für die erfindungsgemäße Vorrichtung.

Bei einer nächsten Weiterbildung steuert die Steuereinheit den Zündwinkel abhängig von der Motordrehzahl und/oder von der Motorlast. Damit werden auch bei der Ersatzmaßnahme die wesentlichen Kenngrößen berücksichtigt, die für die Einstellung des Zündwinkels maßgeblich sind. Obwohl eine Regelung in einem geschlossenen Regelkreis nicht mehr möglich ist, wird eine Steuerung durchgeführt, um dennoch einen annehmbaren Zündwinkel einstellen zu können.

### ZEICHNUNGEN

Im folgenden werden Ausführungsbeispiele der Erfindung an Hand der beiliegenden Zeichnungen erläutert. Darin zeigen:
- Figur 1: ein Blockschaltbild eines Teils einer Steuerschaltung zum Aktivieren einer Mehrfacheinspritzung bei Ausfall einer Klopfregelung, und
- Figur 2: ein Blockschaltbild des anderen Teils der Steuerschaltung.

### BESCHREIBUNG DER AUSFÜHRUNGSBEISPIELE

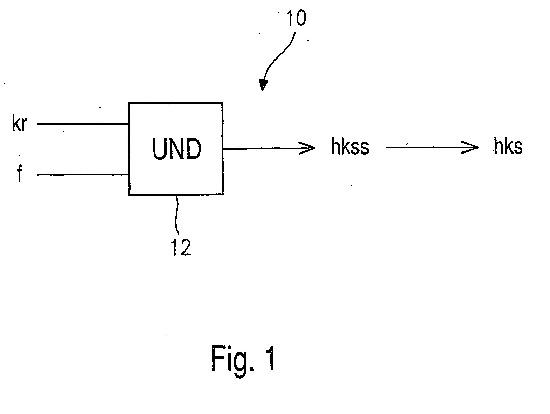

Figur 1 zeigt ein Blockschaltbild eines Teils einer Steuerschaltung 10 zum Aktivieren einer Mehrfacheinspritzung bei Ausfall einer Klopfregelung eines nicht dargestellten Benzin-Direkteinspritz-Motors. Die Steuerschaltung 10 enthält ein UND-Verknüpfungsglied 12, an dessen einem Eingang ein Aktivierungssignal kr und an dessen anderem Eingang ein Fehlersignal f anliegen. Das Aktivierungssignal kr und das Fehlersignal f werden durch ein Steuergerät der Zündanlage erzeugt. Das Aktivierungssignal kr hat den Schaltzustand logisch EINS, wenn die Klopfregelung aktiv sein soll. Das Fehlersignal f hat den Schaltzustand logisch EINS, wenn die Klopfregelung gestört ist. Das UND-Verknüpfungsglied 12 verknüpft die Werte des Aktivierungssignals und des Fehlersignals gemäß der logischen UND-Funktion und gibt ein Anforderungssignal hkss aus, dessen Signalwert logisch EINS das Umschalten von Einfacheinspritzung zu Doppeleinspritzung veranlasst. Die Buchstabenfolge hkss bedeutet homogener Klopfschutz-Soll.

Die zum Umschalten der Einspritzart erforderlichen Verfahrensschritte und Baueinheiten sind nicht Gegenstand der Erfindung und werden deshalb nicht näher erläutert. Beispielsweise kann beim Umschalten die Stellung der Drosselklappe geändert werden. Außerdem werden die Einspritzdüsen nach einem anderen Schema angesteuert.

Wenn das Umschalten erfolgreich durchgeführt wird, wird der Signalwert eines Kontrollsignals hks (homogener Klopfschutz) auf logisch EINS geschaltet. Lässt sich das Umschalten jedoch nicht ausführen, so bleibt der Signalwert des Kontrollsignals hks auf dem Wert logisch NULL. Beispielsweise ist dies der Fall, wenn der den Ausfall der Klopfregelung verursachende Fehler auch das Umschalten auf Doppeleinspritzung verhindert.

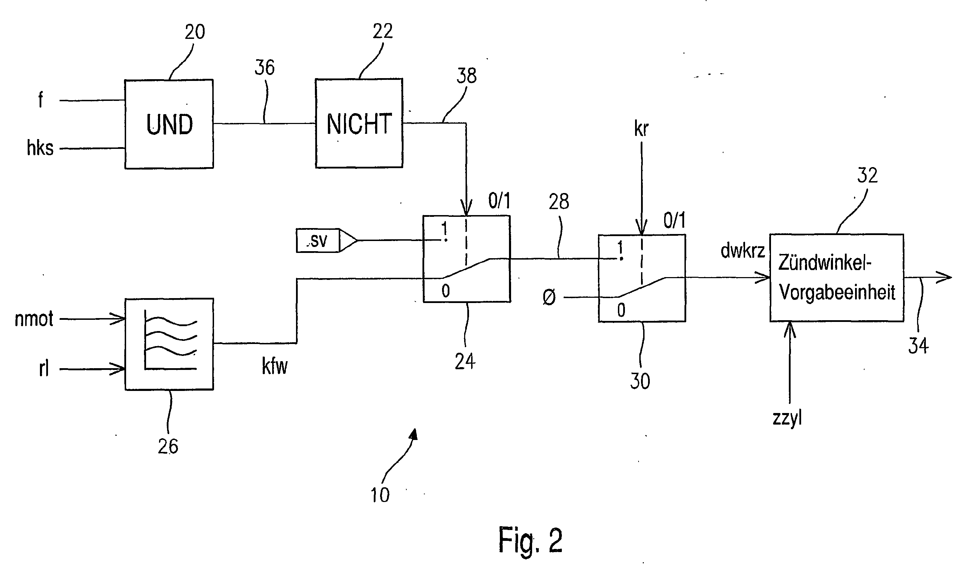

Figur 2 zeigt den anderen Teil der Steuerschaltung 10. Die Steuerschaltung 10 enthält ein weiteres UND-Verknüpfungsglied 20, an dessen einem Eingang das Fehlersignal f und an dessen anderen Eingang das Kontrollsignal hks anliegen. Das UND-Verknüpfungsglied 20 verknüpft die an seinen Eingängen anliegenden Signalwerte gemäß der logischen UND-Funktion. Der Ausgang des UND-Verknüpfungsgliedes 20 ist mit dem Eingang eines NICHT-Gliedes 22 verbunden, das an seinem Ausgang einen zu dem an seinem Eingang anliegenden Signalwert invertierten Signalwert ausgibt. Der Ausgang des NICHT-Gliedes 22 ist mit dem Umschalteingang einer Umschalteinheit 24 verbunden. Abhängig vom Signal am Umschalteingang schaltet die Umschalteinheit 24 zwischen zwei Schaltzuständen 0 und 1 um.

Die Steuerschaltung 10 enthält außerdem eine Kennfeldeinheit 26, in der verschiedenen Zündkennfelder für die Betriebsart Doppeleinspritzung gespeichert sind. Die Kennfeldeinheit 26 hat mehrere Eingänge, von denen in Figur 2 Eingänge zum Eingeben eines Drehzahlsignals nmot und eines Lastsignals rl (relative Luftfüllung) dargestellt sind. Die Kennfeldeinheit 26 liest abhängig von den Signalwerten des Drehzahlsignals nmot und des Lastsignals rl einen Wert für den Zündwinkel aus einer nicht dargestellten Speichereinheit aus und gibt einen Kennfeldwert kfw aus. Die Kennfeldeinheit 26 lässt sich sowohl analog als auch digital aufbauen. Das Drehzahlsignal nmot, das Lastsignal r1 und der Kennfeldwert kfw sind dann analoge bzw. digitale Signale.

Der Kennfeldwert kfw liegt an dem einen Eingang der Umschalteinheit 24 an und wird im Schaltzustand 0 der Umschalteinheit 24 am Ausgang der Umschalteinheit 24 ausgegeben, siehe Ausgangssignal 28. Der andere Eingang der Umschalteinheit 24 ist mit dem Ausgangssignal sv einer nicht dargestellten Klopfregelungseinheit zur Spätverstellung verbunden, die den Zündwinkel in einem Regelungsprozess verstellt. Das Ausgangssignal sv gelangt im Schaltzustand 1 der Umschalteinheit 24 zum Ausgang der Umschalteinheit 24.

Die Steuerschaltung 10 enthält eine weitere Umschalteinheit 30, an deren Umschalteingang das Aktivierungssignal kr anliegt. Abhängig vom Signalwert des Aktivierungssignals kr arbeitet die Umschalteinheit 30 in zwei Schaltzustände 0 bzw. 1. An dem einen Eingang der Umschalteinheit 30 liegt ständig der Signalwert logisch NULL an. Hat das Kontrollsignal kr den Wert logisch NULL, so wird im Schaltzustand 0 der Umschalteinheit 30 der an dem Eingang anliegende Wert NULL am Ausgang der Umschalteinheit ausgegeben und als Eingangssignal dwkrz für eine Zündwinkel-Vorgabeeinheit 32 genutzt.

Der andere Eingang der Umschalteinheit 30 ist mit dem Ausgang der Umschalteinheit 24 verbunden, so dass im Schaltzustand 1 der Umschalteinheit 30 das Ausgangssignal 28 den Verlauf des Eingangssignals dwkrkz bestimmt.

Die Zündwinkel-Vorgabeeinheit 32 hat weiterhin einen Eingang für ein Zylinderzählsignal zzyl, dessen Signalwert den Zylinder angibt, in dessen Verbrennungsraum eine Zündung auszuführen ist. Die Zündwinkel-Vorgabeeinheit 32 gibt ein Zündwinkelsignal 34 aus, das nacheinander die Zündwinkel für alle Zylinder des Motors vorgibt.

Der in Figur 2 gezeigte Teil der Steuerschaltung 10 arbeitet bei voll funktionsfähiger Klopfregelung wie folgt. Das Fehlersignal f und das Kontrollsignal hks haben den Signalwert logisch NULL. Ein Verknüpfungssignal 36 am Ausgang des UND-Verknüpfungsgliedes 20 hat deshalb ebenfalls den Signalwert logisch NULL. Ein Umschaltsignal 38 am Ausgang des NICHT-Gliedes 22 hat aufgrund der Invertierung des Verknüpfungssignals 36 den Signalwert logisch EINS, so dass die Umschalteinheit 24 in den Schaltzustand 1 schaltet. Das von der Klopfregeleinheit ausgegebene Ausgangssignal sv bestimmt den Verlauf des Ausgangssignals 28. Hat das Aktivierungssignal kr den Wert logisch NULL, so wird kein Klopfen erfasst und eine Klopfregelung ist nicht erforderlich. In diesem Fall hat die Umschalteinheit 30 den Schaltzustand 0, so dass das Eingangssignal dwkrz den Wert logisch NULL hat. Die Zündwinkel-Vorgabeeinheit 32 gibt ein Zündwinkelsignal 34 aus, das hinsichtlich der Klopfregelung nicht korrigiert ist.

Hat dagegen bei funktionsfähiger Klopfregelung das Aktivierungssignal kr den Wert logisch EINS, weil ein Klopfen erfasst wird, so arbeitet die Umschalteinheit 30 im Schaltzustand 1. Im Schaltzustand 1 bestimmt das Ausgangssignal 28 der Umschalteinheit 24 den Verlauf des Eingangssignals dwkrz. Die Zündwinkel-Vorgabeeinheit 32 gibt deshalb ein Zündwinkelsignal 34 aus, das mit Hilfe der durch die Klopfregelung vorgegebenen Zündwinkel korrigiert ist, um dem Klopfen des Motors entgegenzuwirken.

Ist die Funktion der Klopfregelung gestört, so hat zunächst das Fehlersignal f den Wert logisch EINS und das Kontrollsignal hks den Wert logisch NULL. Das Verknüpfungssignal 36 hat deshalb weiterhin den Wert logisch NULL. Die Arbeitsweise der Steuereinheit 10 entspricht der oben erläuterten Arbeitsweise. Wird jedoch aufgrund der oben an Hand der Figur 1 erläuterten Vorgänge der Signalwert des Kontrollsignals hks auf den Wert EINS geschaltet, so ändert sich der Wert des Verknüpfungssignals 36 auf den Wert logisch EINS. Das Kontrollsignal hks hat den Wert logisch EINS, sobald zur Doppeleinspritzung übergegangen worden ist. Die Signaländerung des Verknüpfungssignals 36 hat eine Änderung des Signalwertes des Umschaltsignals 38 zur Folge. Das Umschaltsignal 38 hat nun den Wert logisch NULL, so dass die Umschalteinheit 24 in den Schaltzustand 0 umschaltet. Der von der aktuellen Motordrehzahl, siehe Drehzahlsignal nmot, und von der aktuellen Motorlast, siehe Lastsignal rl, abhängige Kennfeldwert kfw bestimmt nun den Wert des Ausgangssignals 28. Wird kein Klopfen des Motors erfasst, so hat das Aktivierungssignal kr den Wert logisch NULL und die Zündwinkel-Vorgabeeinheit führt keine Korrektur des Zündwinkels bezüglich einer Klopfregelung durch. Wird dagegen ein Klopfen des Motors erfasst, so hat das Aktivierungssignal kr den Wert logisch EINS. Die Umschalteinheit 30 arbeitet im Schaltzustand 1, und der Verlauf des Ausgangssignals 28 bestimmt den Verlauf des Eingangssignals dwkrz. Die Zündwinkel-Vorgabeeinheit 32 korrigiert den Zündwinkel so, dass dem Klopfen entgegengewirkt wird. Dabei wird das in der Kennfeldeinheit 26 hinterlegte Kennfeld für die Doppeleinspritzung zur Korrektur verwendet.

Klopft der Motor nicht mehr, so hat das Aktivierungssignal kr wieder den Wert logisch NULL und die Umschalteinheit 30 schaltet in den Schaltzustand 0 zurück. Das Fehlersignal f und das Kontrollsignal hks bleiben jedoch weiterhin auf dem Wert logisch EINS.

### BEZUGSZEICHENLISTE

- 0,1: Schaltzustand
- 10: Steuerschaltung
- 12: UND-Verknüpfungsglied
- kr: Aktivierungssignal
- f: Fehlersignal
- hkss: Anforderungssignal
- hks: Kontrollsignal
- 20: UND-Verknüpfungsglied
- 22: NICHT-Glied
- 24: Umschalteinheit
- 26: Kennfeldeinheit
- nmot: Drehzahlsignal
- rl: Lastsignal
- kfw: Kennfeldwert
- 28: Ausgangssignal
- sv: Ausgangssignal
- 30: Umschalteinheit
- dwkrz: Eingangssignal
- 32: Zündwinkelvorgabeeinheit
- zzyl: Zylinderzählsignal
- 34: Zündwinkelsignal
- 36: Verknüpfungssignal
- 38: Umschaltsignal

## Patentansprüche

1. Verfahren zum Vermeiden von Klopfen bei Ausfall einer Klopfregelung,
bei dem ein Zündwinkel bzw. Zündzeitpunkt eines Motors mit Direkteinspritzung unter Verwendung einer Klopfregelung zur Vermeidung des Klopfens während des Motorbetriebs geregelt wird,
im fehlerfreien Betrieb der Klopfregelung in den Verbrennungsraum eines Zylinders des Motors mindestens einmal je Arbeitszyklus Kraftstoff eingespritzt wird,
und bei dem die Verbrennung durch die Klopfregelung überwacht wird,
**dadurch gekennzeichnet, dass**
bei einer Störung der Klopfregelung je Arbeitszyklus die Anzahl der Einspritzvorgange geändert wird.

2. Verfahren nach Anspruch 1, **dadurch gekennzeichnet, dass** bei einer Störung der Klopfregelung eines Benzinmotors mindestens einmal mehr je Arbeitszyklus des Zylinders Kraftstoff eingespritzt wird als im fehlerfreien Betrieb der Klopfregelung.

3. Verfahren nach Anspruch 1 oder 2, **dadurch gekennzeichnet, dass** bei einer Störung der Klopfregelung der Zündwinkel bzw. Zündzeitpunkt abhängig vom Betriebspunkt des Motors, beispielsweise Drehzahl und/oder Last, gesteuert wird.

4. Vorrichtung zum Vermeiden von Klopfen bei Ausfall einer Klopfregelung,
mit einer Überwachungsschaltung für eine Klopfregelung, die einen Zündwinkel bzw. Zündzeitpunkt eines Motors mit Direkteinspritzung regelt,
und mit einer Steuereinheit (10), die abhängig vom Ausgangssignal (f) der Überwachungsschaltung bei einem Fehler in der Klopfregelung Ersatzmaßnahmen zur Vermeidung von Klopfen einleitet,
**dadurch gekennzeichnet, dass** die Steuereinheit (10) so aufgebaut ist, dass als Ersatzmaßnahme
die Anzahl der Einspritzvorgänge des.Kraftstoffs je Arbeitszyklus eines Zylinders des Motors geändert wird.

5. Vorrichtung nach Anspruch 4, **dadurch gekennzeichnet, dass** bei einem Benzinmotor als Ersatzmaßnahme die Anzahl der Einspritzvorgänge je Arbeitszyklus erhöht wird.

6. Vorrichtung nach Anspruch 4 oder 5, **dadurch gekennzeichnet, dass** die Steuereinheit (10, 26) den Zündwinkel bzw. Zündzeitpunkt abhängig vom Betriebspunkt des Motors, beispielsweise Drehzahl und/oder Last, steuert.

7. Vorrichtung nach Anspruch 6, **dadurch gekennzeichnet, dass** die Steuereinheit (10) eine erste Umschalteinheit (24) enthält, die abhängig vom Ausgangssignal (f) der Überwachungsschaltung umschaltet,
dass die Steuereinheit (10) eine eingangsseitig mit dem Ausgang der ersten Umschalteinheit (24) verbundene zweite Umschalteinheit (30) enthält, die abhängig von einem die Klopfregelung signalisierenden Signal (kr) umschaltet.

8. Vorrichtung nach Anspruch 7, **dadurch gekennzeichnet, dass** die Steuereinheit (10) zum Erzeugen des Umschaltsignals (38) für die erste Umschalteinheit (24) ein Verknüpfungsglied (20) enthält, an dessen Eingängen das Ausgangssignal (f) der Überwachungsschaltung und ein Kontrollsignal (hks) anliegen, das den Übergang zur Ersatzmaßnahme signalisiert,
und dass der Ausgang des Verknüpfungsgliedes (20) vorzugsweise unter Zwischenschaltung eines NICHT-Gliedes (22) mit einem Umschalteingang der ersten Umschalteinheit (24) verbunden ist.

9. Vorrichtung nach einem der Ansprüche 4 bis 8, **dadurch gekennzeichnet, dass** die Steuereinheit (10) eine weitere Verknüpfungseinheit (12) enthält, an deren Eingängen das Ausgangssignal (f) der Überwachungsschaltung und ein die Klopfregelung signalisierendes Signal (kr) anliegen,
und dass der Ausgang der weiteren Verknüpfungseinheit (12) mit einer Einheit zum Steuern der Einspritzvorgänge verbunden ist.

## Claims

1. Method for preventing knocking if a knock controller fails,
in which an ignition angle and/or ignition point of an engine with direct injection are/is controlled using a knock controller for preventing knocking during operation of the engine,
fuel is injected into the combustion chamber of a cylinder of the engine at least once per operating cycle during error-free operation of the knock controller,
and in which combustion is monitored by the knock controller,
**characterized in that**
the number of injection processes is changed for each operating cycle when there is a fault in the knock controller.

2. Method according to Claim 1, **characterized in that** fuel is injected at least once more per operating cycle of the cylinder when there is a fault in the knock controller of a petrol engine than during error-free operation of the knock controller.

3. Method according to Claim 1 or 2, **characterized in that** the ignition angle and/or ignition point are/is controlled as a function of the operating point of the engine, for example rotational speed and/or load, when there is a fault in the knock controller.

4. Apparatus for preventing knocking if a knock controller fails,
having a monitoring circuit for a knock controller which controls an ignition angle and/or ignition point of an engine with direct injection,
and having a control unit (10) which initiates contingency measures for preventing knocking as a function of the output signal (f) from the monitoring circuit if there is an error in the knock controller,
**characterized in that** the control unit (10) is designed such that, as the contingency measure,
the number of fuel-injection processes per operating cycle of a cylinder of the engine is changed.

5. Apparatus according to Claim 4, **characterized in that**, as the contingency measure, the number of injection processes per operating cycle is increased in the case of a petrol engine.

6. Apparatus according to Claim 4 or 5, **characterized in that** the control unit (10, 26) controls the ignition angle and/or the ignition point as a function of the operating point of the engine, for example rotational speed and/or load.

7. Apparatus according to Claim 6, **characterized in that** the control unit (10) comprises a first changeover unit (24) which changes over as a function of the output signal (f) from the monitoring circuit,
**in that** the control unit (10) comprises a second changeover unit (30) whose input end is connected to the output of the first changeover unit (24) and which changes over as a function of a signal (kr) which signals knock control.

8. Apparatus according to Claim 7, **characterized in that** the control unit (10) comprises a combinational logic element (20) in order to generate the changeover signal (38) for the first changeover unit (24), with the output signal (f) from the monitoring circuit and a control signal (hks), which signals the transfer to the contingency measure, being applied to the inputs of the said combinational logic element, and **in that** the output of the combinational logic element (20) is connected to a changeover input of the first changeover unit (24), preferably with the interposition of a NOT gate (22).

9. Apparatus according to one of Claims 4 to 8, **characterized in that** the control unit (10) comprises a further combinational logic unit (12), with the output signal (f) from the monitoring circuit and a signal (kr), which signals knock control, being applied to the inputs of the said further combinational logic unit,
and **in that** the output of the further combinational logic unit (12) is connected to a unit for controlling the injection processes.

## Revendications

1. Procédé permettant d'éviter le cliquetis en cas de défaillance d'un appareil de régulation du cliquetis,
selon lequel on règle un angle d'allumage ou un point d'allumage d'un moteur à injection directe, à l'aide d'un appareil de régulation du cliquetis afin d'éviter le cliquetis lors du fonctionnement du moteur, on produit dans le cas d'un fonctionnement correct de l'appareil de régulation du cliquetis, une injection de carburant dans la chambre de combustion d'un cylindre du moteur au moins une fois par cycle de travail, et on contrôle la combustion par l'appareil de régulation du cliquetis,
**caractérisé en ce qu'**
en cas de défaillance de l'appareil de régulation du cliquetis on modifie le nombre d'opération d'injection pour chaque cycle de travail.

2. Procédé selon la revendication 1,
**caractérisé en ce qu'**
en cas d'une défaillance de l'appareil de régulation du cliquetis d'un moteur à essence, on produit pour chaque cycle de travail du cylindre au moins une injection de carburant de plus que lors du fonctionnement correct de l'appareil de régulation du cliquetis.

3. Procédé selon la revendication 1 ou 2,
**caractérisé en ce qu'**
en cas d'une défaillance de l'appareil de régulation du cliquetis, l'angle on commande d'allumage ou le point d'allumage en fonction d'un paramètre de fonctionnement du moteur, par exemple la vitesse de rotation et/ou la charge.

4. Dispositif permettant d'éviter le cliquetis en cas de défaillance d'un appareil de régulation du cliquetis,
comportant un circuit de contrôle pour un appareil de régulation du cliquetis, qui règle un angle d'allumage ou un point d'allumage d'un moteur à injection directe,
et une unité de commande (10) qui, dans le cas d'une erreur de l'appareil de régulation du cliquetis, engage, en fonction du signal de sortie (f) du circuit de contrôle, des mesures de remplacement visant à éviter le cliquetis,
**caractérisé en ce que**
l'unité de commande (10) est prévue pour effectuer comme mesure de remplacement une modification du nombre d'opérations d'injection de carburant pour chaque cycle de travail d'un cylindre du moteur.

5. Dispositif selon la revendication 4,
**caractérisé en ce que**
pour un moteur à essence, la mesure de remplacement consiste à augmenter le nombre d'opérations d'injection pour chaque cycle de travail.

6. Dispositif selon la revendication 4 ou 5,
**caractérisé en ce que**
l'unité de commande (10, 26) commande l'angle d'allumage ou le point d'allumage en fonction d'un paramètre de fonctionnement du moteur, par exemple la vitesse de rotation et/ou la charge.

7. Dispositif selon la revendication 6,
**caractérisé en ce que**
l'unité de commande (10) contient une première unité de commutation (24) qui commute en fonction du signal de sortie (f) du circuit de contrôle, et
l'unité de commande (10) contient une deuxième unité de commutation (30) connectée du côté entrée à la sortie de la première unité de commutation (24), laquelle deuxième unité de commutation commute en fonction d'un signal (kr) signalisant la régulation du cliquetis.

8. Dispositif selon la revendication 7,
**caractérisé en ce que**
l'unité de commande (10) contient, pour produire le signal de commutation (38) destiné à la première unité de commutation (24), un élément logique (20) dont les entrées reçoivent le signal de sortie (f) du circuit de contrôle et un signal de contrôle (hks) qui signalise le passage à la mesure de remplacement,
et la sortie de l'élément logique (20) est connectée, de préférence par une porte NON (22), avec une entrée de commutation de la première unité de commutation (24).

9. Dispositif selon l'une des revendications 4 à 8,
**caractérisé en ce que**
l'unité de commande (10) contient une unité de combinaison supplémentaire (12) dont les entrées reçoivent le signal de sortie (f) du circuit de contrôle et un signal (kr) signalisant la régulation du cliquetis,
et la sortie de l'unité de combinaison supplémentaire (12) est connectée à une unité de commande des opérations d'injection.
